# EUROPÄISCHE PATENTSCHRIFT

(11) **EP 4 465 079 B1**
(45) Veröffentlichungstag und Bekanntmachung des Hinweises auf die Patenterteilung: **08.04.2026**
(21) Anmeldenummer: 23173936.8
(22) Anmeldetag: 17.05.2023
(51) Int. Cl.: G01S 7/481, G01S 7/497, G01S 17/10

(54) **OPTISCHER DISTANZSENSOR**
OPTICAL DISTANCE SENSOR
CAPTEUR OPTIQUE DE DISTANCE

(43) Veröffentlichungstag der Anmeldung: 20.11.2024
(73) Patentinhaber: Leuze electronic GmbH + Co. KG, 73277 Owen/Teck (DE)
(72) Erfinder: Scheu, Thomas, 72639 Neuffen (DE); Butzbach, Markus, 73734 Esslingen (DE)
(74) Vertreter: Ruckh, Rainer Gerhard

(56) Entgegenhaltungen:
- DE-A1- 102020 106 041
- DE-U1- 202021 106 330

## Beschreibung

Die Erfindung betrifft einen optischen Distanzsensor.

Derartige optische Distanzsensoren dienen zur Distanzbestimmung von Objekten und werden für verschiedenartige Mess- oder Überwachungsaufgaben eingesetzt.

Die optischen Distanzsensoren können insbesondere nach einem Impuls-Laufzeit-Verfahren Distanzmessungen durchführen. Der optische Distanzsensor weist dabei einen Sender auf, der Lichtstrahlen emittiert und in einen Überwachungsbereich aussendet. Die Lichtstrahlen werden von einem zu detektierenden Objekt im Überwachungsbereich reflektiert und zurück zu einem Empfänger des optischen Distanzsensors geführt. In einer Auswerteeinheit erfolgt die Distanzbestimmung anhand einer Auswertung von Empfangssignalen des Empfängers derart, dass die Laufzeit der Lichtimpulse zum Objekt und zurück zum Empfänger ermittelt wird.

Vorteilhaft werden zur Distanzmessung integrierte Laufzeitmodule eingesetzt, die als Sender eine VCSEL-(vertical-cavity surface-emitting laser)Diode oder ein VCSEL-Array aufweisen, das Laserlicht im Infrarotbereich emittiert. Das VCSEL-Array besteht aus möglichst dicht nebeneinander angeordneten VCSELn auf einem Chip. Als Empfänger weisen die Laufzeitmodule in der Regel ein Array von SPADs (single photon avalanche diode) auf. Diese Laufzeitmodule weisen bei geringem Bauvolumen eine hohe Leistungsfähigkeit auf.

Nachteilig hierbei ist, dass derartige optische Distanzsensoren mit Lichtstrahlen im nichtsichtbaren Wellenlängenbereich arbeiten.

Bei zahlreichen Applikationen sind jedoch sichtbare Lichtstrahlen erforderlich, insbesondere um die Strahlführung der Lichtstrahlen optisch kontrollieren zu können oder auch um die Justage der optischen Distanzsensoren bei deren Inbetriebnahme zu vereinfachen.

Prinzipiell können zur Erfüllung dieser Anforderung Laufzeitmodule mit VCSEL-Dioden oder VCSEL-Arrays eingesetzt werden, die Lichtstrahlen im sichtbaren Wellenlängenbereich emittieren.

Nachteilig hierbei ist jedoch, dass deren Fremdlichtfestigkeit um eine Zehnerpotenz schlechter ist als bei VCSEL-Einheiten, die Infrarotlicht emittieren. Dies führt zu einer wesentlichen Verschlechterung der Nachweissicherheit des optischen Distanzsensors.

Die DE 20 2021 106 330 U1 betrifft einen optoelektronischen Sensor mit wenigstens einer Messlichtquelle zum Aussenden von wenigstens einem Messlichtstrahl im infraroten Wellenlängenbereich in einen Überwachungsbereich, wenigstens einer Pilotlichtquelle zum Aussenden von wenigstens einem Pilotlichtstrahl im sichtbaren Wellenlängenbereich in den Überwachungsbereich, einem optischen Element zum koaxialen Überlagern des Messlichtstrahls und des Pilotlichtstrahls, einem Lichtempfänger zum Empfangen von aus dem Überwachungsbereich remittierten oder reflektierten Messlichtstrahlen und Erzeugen entsprechender Empfangssignale, sowie einer Steuer- und Auswerteeinheit zur Ansteuerung des Lichtempfängers, der Messlichtquelle und/oder der Pilotlichtquelle und zur Auswertung der Empfangssignale. Das optische Element weist zum koaxialen Überlagern des Messlichtstrahls und des Pilotlichtstrahls wenigstens eine erste optische Metaoberfläche auf.

In der DE 10 2020 106 041 A1 wird ein optoelektronischer Sensor nach Art eines Lichttasters angegeben mit wenigstens einer Messlichtquelle zum Aussenden von Messlichtstrahlen im infraroten Wellenlängenbereich in einen Überwachungsbereich, mit wenigstens einer Pilotlichtquelle zum Aussenden von Pilotlichtstrahlen im sichtbaren Wellenlängenbereich in den Überwachungsbereich, mit einem optischen Element zum koaxialen Überlagern von Messlichtstrahlen und Pilotlichtstrahlen, mit einem Lichtempfänger zum Empfangen von aus dem Überwachungsbereich remittierten oder reflektierten Messlichtstrahlen und Erzeugen entsprechender Empfangssignale, und mit einer Steuer- und Auswerteeinheit zur Ansteuerung des Lichtempfängers, der Messlichtquelle und/oder der Pilotlichtquelle und zur Auswertung der Empfangssignale, wobei das optische Element zum koaxialen Überlagern von Messlichtstrahlen und Pilotlichtstrahlen als Lichtwellenleiter ausgelegt ist.

Der Erfindung liegt die Aufgabe zugrunde einen optischen Distanzsensor der eingangs genannten Art bereitzustellen, der einerseits eine hohe Nachweisempfindlichkeit aufweist und andererseits eine visuelle Kontrolle der Führung dessen Lichtstrahlen ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Distanzsensor mit einem Sender, der Lichtstrahlen in einem nicht sichtbaren Wellenlängenbereich emittiert, mit einem Empfänger, der zum Empfang der von einem Objekt zurückreflektierten Lichtstrahlen ausgebildet ist, und mit einer Auswerteeinheit, die zur Bestimmung der Distanz des Objekts abhängig von Empfangssignalen des Empfängers ausgebildet ist. Eine Pilotsendeeinheit ist vorhanden, die sichtbare Pilotlichtstrahlen emittiert, wobei mittels Einkopplungsmitteln die Pilotlichtstrahlen in den Strahlengang der Lichtstrahlen so eingekoppelt sind, dass die Pilotlichtstrahlen und Lichtstrahlen mit zumindest partiell überlappenden Strahlquerschnitten koaxial verlaufen. Eine variable Blende ist vorhanden, mittels derer eine Strahlformung der Pilotlichtstrahlen derart erfolgt, dass mit diesen ein Teil des Lichtflecks der Lichtstrahlen ausgeleuchtet wird.

Mit dem erfindungsgemäßen optischen Distanzsensor bzw. mit dem Verfahren zum Betrieb dieses optischen Distanzsensors wird eine hohe Sensorfunktionalität realisiert.

Der Sender des optischen Distanzsensors emittiert erfindungsgemäß Lichtstrahlen im nicht sichtbaren Wellenlängenbereich, insbesondere im Infrarotbereich. Dadurch wird eine hohe Nachweisempfindlichkeit des optischen Sensors bei der Detektion von Objekten in einem Überwachungsbereich erhalten. Insbesondere weist der optische Distanzsensor eine signifikant erhöhte Fremdlichtfestigkeit gegenüber einem optischen Distanzsensor, dessen Sender Lichtstrahlen im sichtbaren Wellenlängenbereich emittiert, auf.

Erfindungsgemäß weist der optische Distanzsensor eine Pilotsendeeinheit auf, die Pilotlichtstrahlen im sichtbaren Wellenlängenbereich emittiert. Die Pilotlichtstrahlen werden durch Einkopplungsmittel so in den Strahlengang eingekoppelt, dass die Pilotlichtstrahlen und die Lichtstrahlen zumindest teilweise überlappend koaxial verlaufen, wobei der koaxiale Verlauf vorteilhaft im gesamten Überwachungsbereich erhalten wird.

Mit den sichtbaren Pilotlichtstrahlen erfolgt eine Visualisierung der messenden nicht sichtbaren Lichtstrahlen, d.h. ein Benutzer sieht anhand der Pilotlichtstrahlen den Verlauf der messenden nicht sichtbaren Lichtstrahlen und kann so den Strahlenverlauf der Lichtstrahlen kontrollieren. Dies kann für eine Justage des optischen Distanzsensors vor dessen Inbetriebnahme genutzt werden. Zudem kann der Benutzer den Strahlverlauf der Lichtstrahlen auch während des auf die Justage folgenden Arbeitsbetriebs fortlaufend kontrollieren.

Ein wesentlicher Aspekt hierbei besteht darin, dass die Pilotlichtstrahlen nicht seitlich versetzt, sondern koaxial zu den Lichtstrahlen verlaufen. Bei zu den

Lichtstrahlen seitlich versetzten Pilotlichtstrahlen müsste ein Benutzer zusätzliche Messmittel einsetzen, um den Verlauf der nicht sichtbaren Lichtstrahlen anhand der sichtbaren Pilotlichtstrahlen zu bestimmen. Dieser Aufwand entfällt bei den erfindungsgemäßen optischen Distanzsensoren, da die Pilotlichtstrahlen koaxial zu den Lichtstrahlen verlaufen, so dass die Pilotlichtstrahlen unmittelbar und direkt die gewünschte Information über den räumlichen Verlauf der Lichtstrahlen liefern.

In einer besonders vorteilhaften Ausführung sind die Pilotsendeeinheit und die Einkopplungsmittel so ausgebildet, dass die Lichtstrahlen und die Pilotlichtstrahlen im gesamten Überwachungsbereich nicht nur koaxial verlaufen, sondern auch näherungsweise den gleichen Strahlquerschnitt aufweisen. Dies hat den Vorteil, dass auch dann eine Ausrichtung des Sensors ohne weitere Hilfsmittel möglich ist, wenn nur ein Teil der Lichtstrahlen auf ein Objekt im Überwachungsbereich fällt. Bei einer nur partiellen Überlappung der Strahlquerschnitte von Lichtstrahlen und Pilotlichtstrahlen kann es vorkommen, dass die Pilotlichtstrahlen ein nur teilweise von den Lichtstrahlen beleuchtetes Objekt verfehlen, oder dass umgekehrt die Pilotlichtstrahlen ein Objekt treffen, das von den Lichtstrahlen verfehlt wird.

Die Pilotsendeeinheit kann diffuse oder gerichtete, insbesondere kollimierte Pilotlichtstrahlen abstrahlen, wobei die Strahlcharakteristik vorteilhaft an die Strahlcharakteristik der Lichtstrahlen angepasst ist.

Prinzipiell kann bei dem erfindungsgemäßen optischen Distanzsensor die Distanzmessung nach einem Phasenmessverfahren erfolgen.

Besonders vorteilhaft emittiert der Sender Lichtstrahlen in Form von Lichtimpulsen. Die Distanzmessung wird dann nach einem Impuls-Laufzeit-Verfahren durchgeführt.

Um eine hohe Leistungsfähigkeit des optischen Distanzsensors zu erzielen werden als Sender integrierte Bausteine eingesetzt, wobei besonders vorteilhaft der Sender eine VCSEL-Einheit ist.

Die VCSEL-Einheit kann von einer VCSEL-Diode gebildet sein, die nur einen, vorzugsweise gerichteten Lichtstrahl abstrahlt. Weiterhin kann die VCSEL-Einheit von einem VCSEL-Array gebildet sein, das mehrere Lichtstrahlen abstrahlt. Mit dieser Ausführungsform kann insbesondere ein großer Öffnungswinkel der abgestrahlten Lichtstrahlen realisiert werden und die gesamte abgestrahlte optische Leistung steigt an was die Performance des Messsystems verbessert.

Vorteilhaft und insbesondere an den Sender in Form einer VCSEL-Einheit angepasst ist der Empfänger in Form einer oder mehrerer SPAD (single photon avalanche diode) ausgebildet.

Anstelle einer VCSEL kann auch eine Laserdiode (Kantenemitter) als Sendelichtquelle mit infraroter Strahlung eingesetzt werden. Damit kann man kleine Lichtflecke mit hoher Bestrahlungsstärke realisieren.

Gemäß einer ersten Ausgestaltung sind der Sender und die Pilotsendeeinheitjeweils von einem Halbleiterchip gebildet, wobei die Halbleiterchips übereinander liegend angeordnet und relativ zueinander fixiert sind. Beispielsweise kann der den Sender bildende Halbleiterchip oben liegend auf dem die Pilotsendeeinheit bildenden Halbleiterchip angeordnet sein, wobei der den Sender bildende Halbleiterchip als Einkopplungsmittel in der Mitte ein Loch aufweist, durch welches die Pilotsendeeinheit die Pilotlichtstrahlen abstrahlt, die dann koaxial zu den Lichtstrahlen des Senders verlaufen. Natürlich kann auch die umgekehrte Anordnung vorgesehen sein, bei der der oben liegende und ein Loch aufweisende Halbleiterchip die Pilotsendeeinheit bildet, wobei der Sender die Lichtstrahlen durch das Loch des die Pilotsendeeinheit bildenden Halbleiterchip, abstrahlt.

Gemäß einer weiteren Ausgestaltung kann auf die lichtabstrahlende Fläche des Senders, der in Form eines Halbleiterchips, insbesondere in Form eines VCSEL-Arrays ausgebildet ist, ein Material aufgebracht werden, das die Infrarot-Lichtstrahlen des Senders in sichtbare Pilotlichtstrahlen wandelt. Das Material erstreckt sich nicht über die gesamte lichtabstrahlende Fläche des Senders, so dass der Sender in den nicht abgedeckten Bereichen Infrarot-Lichtstrahlen in den Überwachungsbereich sendet.

Gemäß einer weiteren Ausgestaltung sind als Einkopplungsmittel Lichtleiter vorgesehen. Die Lichtleiter werden vorzugsweise um den Sender gelegt, so dass von der Pilotsendeeinheit emittierte Pilotlichtstrahlen über die Lichtleiter parallel in den Strahlengang der Lichtstrahlen eingekoppelt werden. Die Lichtleiter können insbesondere auch in Form von Glasfasern gebildet sein.

Gemäß einer weiteren vorteilhaften Ausgestaltung ist als Einkopplungsmittel ein optisches Umlenkelement vorgesehen.

Mit dem optischen Umlenkelement erfolgt generell eine Umlenkung von Pilotlichtstrahlen der Pilotsendeeinheit derart, dass die Pilotlichtstrahlen koaxial in den Strahlengang der Lichtstrahlen eingekoppelt werden.

Vorteilhaft ist das optische Umlenkelement ein dichroitischer Spiegel oder bildet einen Interferenzfilter.

Damit weist das optische Umlenkelement wellenlängenselektive Eigenschaften auf.

Das optische Umlenkelement kann dabei in Form einer beschichteten Glasscheibe ausgebildet sein.

Das optisches Umlenkelement kann ein rein reflektierendes Element sein oder auch in Form eines Strahlteilerspiegels ausgebildet sein, der insbesondere Licht in einem ersten Wellenlängenbereich reflektiert und für Licht in einem zweiten Wellenlängenbereich durchlässig ist.

Generell ist es möglich, dass mit dem optischen Umlenkelement die Form des Strahlquerschnitts der Pilotlichtstrahlen vorgegeben wird.

Insbesondere kann das optische Umlenkelement derart ausgebildet sein, dass dieses nur bestimmte Bereiche der auftreffenden Pilotlichtstrahlen reflektiert. Dadurch können bestimmte Muster der Pilotlichtstrahlen erzeugt werden, beispielsweise in Form von Rechtecken, Ringen oder mehreren Punkten.

Gemäß einer vorteilhaften Ausführungsform wird mittels einer Blende die Größe des Lichtflecks der Pilotlichtstrahlen an die Größe des Lichtflecks der Lichtstrahlen angepasst.

Die Blende kann insbesondere direkt vor der Pilotsendeeinheit angeordnet sein. Alternativ kann die Blende in Abstand zur Pilotsendeeinheit angeordnet sein.

Erfindungsgemäß ist eine variable Blende vorhanden, mittels derer eine Strahlformung der Pilotlichtstrahlen derart erfolgt, dass mit diesen ein Teil des Lichtflecks der Lichtstrahlen ausgeleuchtet wird.

Besonders vorteilhaft wird eine elektronisch steuerbare variable Blende eingesetzt. Insbesondere kann die variable Blende in Form einer TFT-(thin-film transistor) Matrix ausgebildet sein, bei der einzelne Matrixelemente transparent oder lichtundurchlässig geschaltet werden können. Damit kann schnell und exakt die Größe und Form der Blendenöffnung vorgegeben werden.

Werden die Pilotsendestrahlen durch eine Blendenabbildung realisiert, kann durch eine Variation der Größe der Blendenöffnung der Öffnungswinkel der Pilotlichtstrahlen verändert werden um diesen in Abhängigkeit der gemessenen Distanz an den tatsächlichen Sichtbereich des Empfängers insbesondere SPAD-Arrays anzupassen. In dieser Ausprägungsform wird der Pilotlichtfleck nicht mehr an die Größe des Sendelichtflecks angepasst.

Besonders vorteilhaft wird die variable Blende in Kombination mit einem Sender, der in einem großen Öffnungswinkel Lichtstrahlen abstrahlt, eingesetzt. Der Sender ist dann vorteilhaft von einem VCSEL-Array gebildet. Dann wird mit den Lichtstrahlen ein großflächiger Messbereich erfasst. Mit der variablen Blende können dann gezielt einzelne Teilbereiche des Messbereichs markiert, d.h. visualisiert werden, beispielsweise die Teilbereiche, innerhalb derer Objekte erfasst werden sollen.

Gemäß einer weiteren vorteilhaften Ausführungsform ist eine steuerbare Linse vorhanden, mittels derer der Verlauf der Pilotlichtstrahlen an den Verlauf der Lichtstrahlen angepasst wird.

Die Linse kann insbesondere abhängig von gemessenen Distanzwerten gesteuert werden um so den Lichtfleck der Pilotlichtstrahlen an die jeweilige Objektdistanz anzupassen. Insbesondere kann die Linse so gesteuert werden, dass im gesamten Überwachungsbereich die Größe des Lichtflecks der Pilotlichtstrahlen der Größe des Lichtflecks der Lichtstrahlen entspricht.

Gemäß einer weiteren vorteilhaften Ausführungsform ist ein Verstellmechanismus vorhanden, der zur Veränderung der Strahlrichtung der Pilotlichtstrahlen ausgebildet ist.

Mit dem Verstellmechanismus wird die Strahlrichtung der Pilotlichtstrahlen in einem Justagevorgang während der Gerätemontage derart vorgegeben, dass dann mit den Einkopplungsmitteln eine Einkopplung der Pilotlichtstrahlen in den Strahlengang der Lichtstrahlen derart erfolgen kann, dass die Pilotlichtstrahlen und Lichtstrahlen koaxial verlaufen.

Besonders vorteilhaft wird der Verstellmechanismus durch eine Schwenklagerung realisiert, mit der in einer oder zwei Raumrichtungen die Richtung der Pilotlichtstrahlen eingestellt werden kann.

Besonders vorteilhaft ist die Pilotsendeeinheit auf einer Leiterplatte angeordnet, die mittels einer Schwenklagerung geschwenkt werden kann.

Generell sind Fixiermittel vorhanden, um eine im Rahmen einer Justage aufgefundene optimierte Stellung insbesondere Schwenkposition der Pilotsendeeinheit dauerhaft zu fixieren. Als Fixiermittel eignen sich Löt- und Klebeverbindungen.

Gemäß einer besonders vorteilhaften Ausführungsform sind Schaltmittel vorhanden, mittels derer die Pilotsendeeinheit ein- und ausgeschaltet werden kann.

Die Pilotsendeeinheit kann dann gezielt nur in vorgegebenen Zeitbereichen aktiviert sein, in der eine Visualisierung der Lichtstrahlen mit den Pilotlichtstrahlen benötigt wird. Die Aktivierung und auch die Deaktivierung der Pilotsendeeinheit kann durch Eingabe von Steuersignalen in den optischer Distanzsensor oder durch Betätigung eines Bedienelements am optischen Distanzsensor erfolgen. Insbesondere kann die Pilotsendeeinheit nach einer bedienergeführten Aktivierung für eine voreingestellte Zeit aktiviert bleiben.

Die Funktionalität des optischen Distanzsensors kann dadurch noch erweitert werden, dass die Pilotlichtstrahlen ein Anzeigemittel zur Anzeige von Sensorinformationen ausbilden.

Die anzuzeigenden Sensorinformationen können Statuszustände, insbesondere Fehlerzustände sein.

Insbesondere kann der optische Distanzsensor auch derart ausgebildet sein, dass mit diesem abhängig von den ermittelten Distanzwerten ein binäres Schaltsignal generiert wird, dessen Schaltzustände angeben, ob ein Objekt in einem vorgegebenen Distanzbereich vorhanden ist oder nicht. Dann können die Schaltzustände des Schaltsignals als Sensorinformationen angezeigt werden.

Durch unterschiedliche Blinkfrequenzen der sichtbaren Pilotlichtstrahlen können mehrere unterschiedliche Sensorinformationen angezeigt werden.

Alternativ oder zusätzlich können mit unterschiedlichen Farben der Pilotlichtstrahlen unterschiedliche Sensorinformation angezeigt werden, wobei unterschiedliche Farben der Pilotlichtstrahlen dadurch generiert werden können, dass die Pilotsendeeinheit mehrere Senderelemente aufweist, die Licht in unterschiedlichen Farben emittieren.

Beispielsweise kann die Pilotsendeeinheit zwei Senderelemente, beispielsweise in Form von Leuchtdioden aufweisen, mit deren Pilotlichtstrahlen in unterschiedlichen Farben generiert werden. Mittels der Einkopplungsmittel kann eine Strahlführung derart realisiert sein, dass die unterschiedlich farbigen Pilotlichtstrahlen parallel zueinander verlaufen. Unterschiedliche Sensorinformation können dann dadurch angezeigt werden, dass beide Senderelemente oder nur eines der Senderelemente aktiviert ist bzw. sind.

Die Erfindung wird im Folgenden anhand der Zeichnungen erläutert. Es zeigen:
- Figur 1:: Erstes Ausführungsbeispiel des erfindungsgemäßen optischen Distanzsensors.
- Figur 1a:: Strahlquerschnitte von Lichtstrahlen und Pilotlichtstrahlen für den optischen Distanzsensor gemäß Figur 1.
- Figur 2:: Weiteres Ausführungsbeispiel des erfindungsgemäßen optischen Distanzsensors.
- Figur 3:: Weiteres Ausführungsbeispiel des erfindungsgemäßen optischen Distanzsensors.
- Figur 4:: Weiteres Ausführungsbeispiel des erfindungsgemäßen optischen Distanzsensors.
- Figur 5:: Weitere Ausführungsform von Strahlquerschnitten von Pilotlichtstrahlen und Lichtstrahlen.
- Figur 6a, 6b:: Beispiele für Strukturen von optischen Umlenkelementen für den optischen Distanzsensor.
- Figur 7:: Beispiel einer Visualisierung eines Teilbereichs von Lichtstrahlen mittels Pilotlichtstrahlen.
- Figur 8:: Weiteres Ausführungsbeispiel des erfindungsgemäßen optischen Distanzsensors.
- Figur 8a:: Variante der Ausführungsform gemäß Figur 8.
- Figur 9:: Strahlquerschnitte von Lichtstrahlen und Pilotlichtstrahlen für den optischer Distanzsensor gemäß Figur 8.
- Figur 10:: Erstes Beispiel von Einkopplungsmitteln in Form von Lichtleitern für den erfindungsgemäßen optischen Distanzsensor.
- Figur 11:: Zweites Beispiel von Einkopplungsmitteln in Form von Lichtleitern für den erfindungsgemäßen optischen Distanzsensor. a) Draufsicht b) Schnittdarstellung

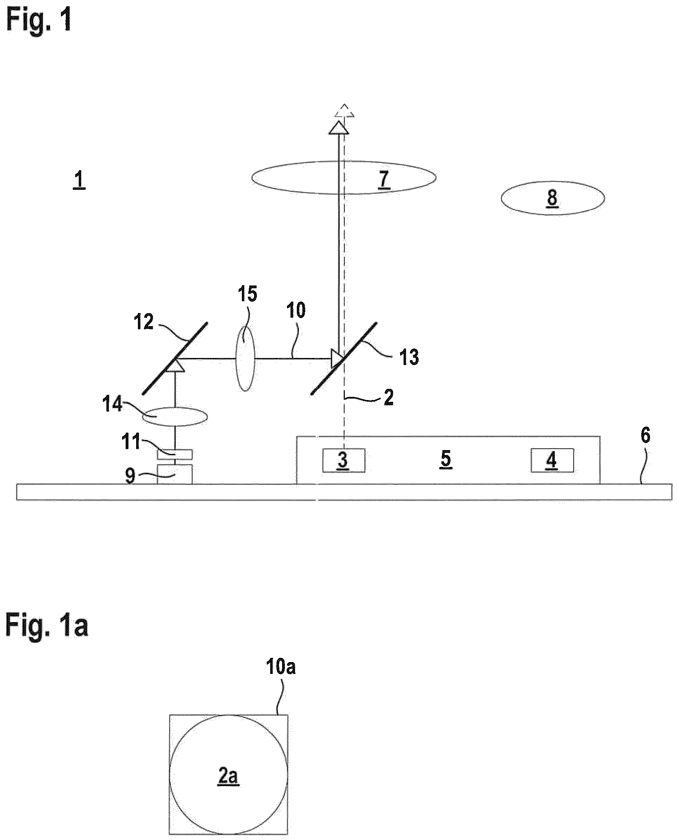

Figur 1 zeigt schematisch Komponenten eines ersten Ausführungsbeispiels des erfindungsgemäßen optischen Distanzsensors 1.

Mit dem optischen Distanzsensor 1 gemäß Figur 1 und gemäß allen folgenden Ausführungsbeispielen erfolgt eine Distanzbestimmung von Objekten innerhalb eines Überwachungsbereichs. Die Distanzmessungen erfolgen dabei nach einem Impuls-Laufzeit-Verfahren. Hierzu weist der optische Distanzsensor 1 generell einen Lichtstrahlen 2 emittierenden Sender 3 und einen Lichtstrahlen 2 empfangenden Empfänger 4 auf. Der Sender 3 emittiert Lichtstrahlen 2 in nicht sichtbarem Wellenlängenbereich. Der Sender 3 emittiert dabei die Lichtstrahlen 2 in Form von Lichtimpulsen. Zur Distanzbestimmung wird die Laufzeit der vom Sender 3 emittierten Lichtimpulse zu einem Objekt und zurück zum Empfänger 4 ausgenutzt. Die Distanzbestimmung erfolgt in einer nicht dargestellten Auswerteeinheit abhängig von Empfangssignalen am Ausgang des Empfängers 4.

Als Ausgangssignal kann der optische Distanzsensor 1 direkt den Distanzwert über einen nicht dargestellten Ausgang ausgeben. Alternativ generiert die Auswerteeinheit als Ausgangssignal abhängig von den ermittelten Distanzwerten ein binäres Schaltsignal, dessen Schaltzustände angeben, ob sich ein Objekt innerhalb eines vorgegebenen Überwachungsbereichs befindet.

Der Sender 3 ist vorteilhaft von einer Infrarotlicht emittierenden Diode, insbesondere einer Laserdiode, gebildet. Besonders vorteilhaft ist der Sender 3 von einer VCSEL-Diode gebildet.

Der Empfänger 4 besteht vorteilhaft aus einer oder mehreren SPAD (singlephoton avalanche diode).

Die Auswerteeinheit besteht aus einem Prozessorsystem, das im einfachsten Fall von einem einzelnen Prozessor gebildet sein kann. Generell kann das Prozessorsystem auch eine mehrkanalige Prozessoranordnung aufweisen, insbesondere dann, wenn der optische Distanzsensor 1 ein Sicherheitssensor ist.

Wie Figur 1 zeigt, sind der Sender 3 und der Empfänger 4 in einem ein integriertes Bauteil bildenden Laufzeitmodul 5 zusammengefasst, das auf einer Leiterplatte 6 gelagert ist.

Zur Strahlformung der vom Sender 3 emittierten Lichtstrahlen 2 ist dem Sender 3 eine Sendeoptik in Form einer Sendelinse 7 nachgeordnet. Dadurch werden kollimierte Lichtstrahlen 2 erhalten. Zur Fokussierung der von einem Objekt zum optischen Distanzsensor 1 zurückreflektierten Lichtstrahlen 2 ist dem Empfänger 4 eine Empfangsoptik in Form einer Empfangslinse 8 vorgeordnet.

Erfindungsgemäß ist bei dem optischer Distanzsensor 1 (in allen Ausführungsformen) eine Pilotsendeeinheit 9 vorgesehen, die sichtbare Pilotlichtstrahlen 10 emittiert. Im vorliegenden Fall emittiert die Pilotsendeeinheit 9 grünes Licht. Die Pilotsendeeinheit 9 kann auch andersfarbige, insbesondere rote Pilotlichtstrahlen 10 emittieren.

Die Pilotsendeeinheit 9 kann beispielsweise aus einer Leuchtdiodenanordnung bestehen, wobei diese eine oder mehrere Leuchtdioden umfassen kann.

Bei der Ausführungsform gemäß Figur 1 ist die Pilotsendeeinheit 9 auf derselben Leiterplatte 6 gelagert, auf welcher auch das Laufzeitmodul 5 gelagert ist.

Auf der Pilotsendeeinheit 9 sitzt eine Blende 11 auf, mit der die Größe des Lichtflecks 2a der Pilotlichtstrahlen 10 an die Größe des Lichtflecks 2a der Lichtstrahlen 2 angepasst wird. Alternativ kann die Blende 11 in Abstand zur Pilotsendeeinheit 9 liegen. Dabei kann insbesondere eine variable Blende 11 eingesetzt werden, insbesondere in Form einer TFT-Matrix.

Erfindungsgemäß sind Einkopplungsmittel vorhanden, mittels derer die Pilotlichtstrahlen 10 so in den Strahlengang der Lichtstrahlen 2 eingekoppelt werden, dass die Pilotlichtstrahlen 10 und Lichtstrahlen 2 koaxial verlaufen, vorzugsweise innerhalb des gesamten Überwachungsbereichs. Figur 1a zeigt in einer Schnittdarstellung den Lichtfleck 2a der Lichtstrahlen 2 und den Lichtfleck 10a der Pilotlichtstrahlen 10. Wie aus Figur 1a ersichtlich überlappen diese Lichtflecke 2a, 10a partiell.

Im vorliegenden Fall sind als Einkopplungsmittel ein Umlenkspiegel 12 und ein Umlenkelement 13 in Form eines dichroitischen Spiegels vorgesehen. Die Pilotlichtstrahlen 10 werden am Umlenkspiegel 12 reflektiert. Der dichroitische Spiegel weist eine wellenlängenabhängige Charakteristik auf und reflektiert die Pilotlichtstrahlen 10. Andererseits ist der dichroitische Spiegel durchlässig für die Lichtstrahlen 2.

Durch diese Einkopplungsmittel wird ein koaxialer Strahlengang der Lichtstrahlen 2 und Pilotlichtstrahlen 10, erhalten, so dass mit den Pilotlichtstrahlen 10 der Strahlengang der Lichtstrahlen 2 visualisiert wird.

Zwischen der Pilotsendeeinheit 9 und dem Umlenkspiegel 12 befindet sich eine erste Linse 14. Zwischen dem Umlenkspiegel 12 und dem dichroitischen Spiegel befindet sich eine zweite Linse 15.

Die Linsen 14, 15 sind vorzugsweise steuerbar um den Verlauf der Pilotlichtstrahlen 10 im Überwachungsbereich variabel einstellen zu können.

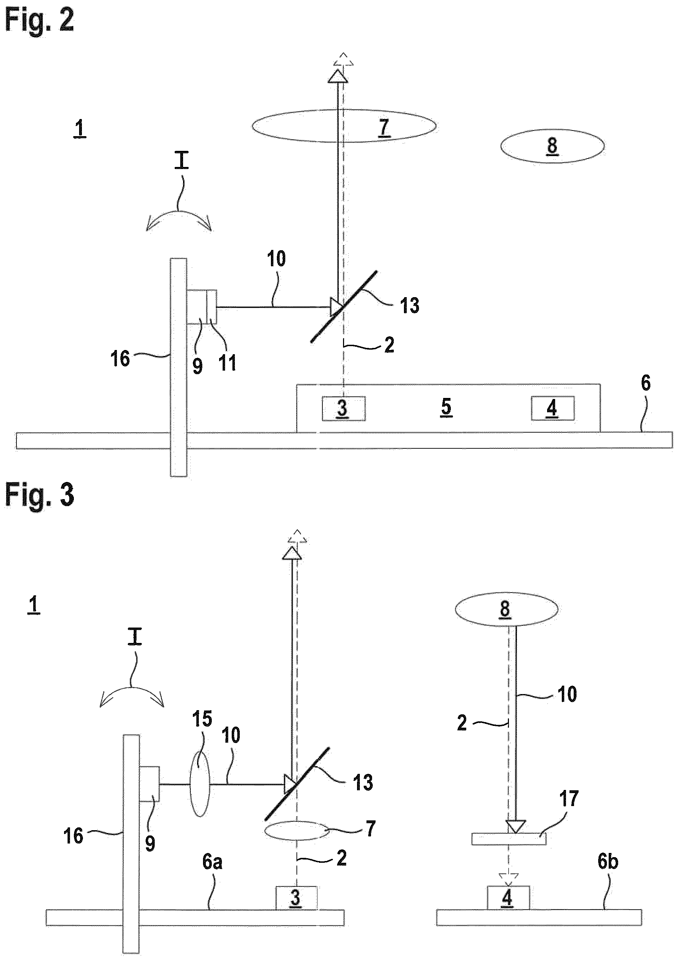

Figur 2 zeigt ein weiteres Ausführungsbeispiel des optischen Distanzsensors 1. Im Unterschied zur Ausführungsform gemäß Figur 1 ist die Pilotsendeeinheit 9 auf einer weiteren Leiterplatte 16 angeordnet, die schwenkbar an der ersten Leiterplatte 6 gelagert ist. Durch eine Schwenkbewegung der Leiterplatte 16 (veranschaulicht mit dem Doppelpfeil I) kann die Richtung von der Pilotsendeeinheit 9 emittierten sichtbaren Pilotlichtstrahlen 10 eingestellt werden.

Auf der Pilotsendeeinheit 9 sitzt wieder eine Blende 11 auf. Als Einkopplungsmittel ist nur der dichroitische Spiegel vorgesehen, durch welchen die Pilotlichtstrahlen 10 koaxial zu den Lichtstrahlen 2 verlaufend eingekoppelt werden.

Figur 3 zeigt eine Variante der Ausführungsform gemäß Figur 2. Der Sender 3 und der Empfänger 4 bilden in diesem Fall räumlich getrennte Einheiten. Der Sender 3 mit der weiteren Leiterplatte 16, die die Pilotsendeeinheit 9 trägt, befindet sich auf einer ersten Leiterplatte 6a, der Empfänger 4 auf einer zweiten Leiterplatte 6b.

Die Pilotlichtstrahlen 10 werden wieder über einen dichroitischen Spiegel in den Strahlengang der Lichtstrahlen 2 eingekoppelt. Zwischen der Pilotsendeeinheit 9 ggf. mit vorgeordneter Blende 11 (nicht dargestellt), und dem dichroitischer Spiegel befindet sich eine Linse 15.

Die Sendelinse 7 befindet sich zwischen Sender 3 und dichroitischem Spiegel.

Zwischen Empfänger 4 und Empfangsoptik befindet sich ein optischer Filter 17, mit dem die Pilotlichtstrahlen 10 sowie Umgebungslicht ausgeblendet werden, so dass nur Lichtstrahlen 2 auf den Empfänger 4 treffen.

Ein solcher optischer Filter 17 kann auch bei den Ausführungsformen gemäß den Figuren 1 und 2 vorhanden sein.

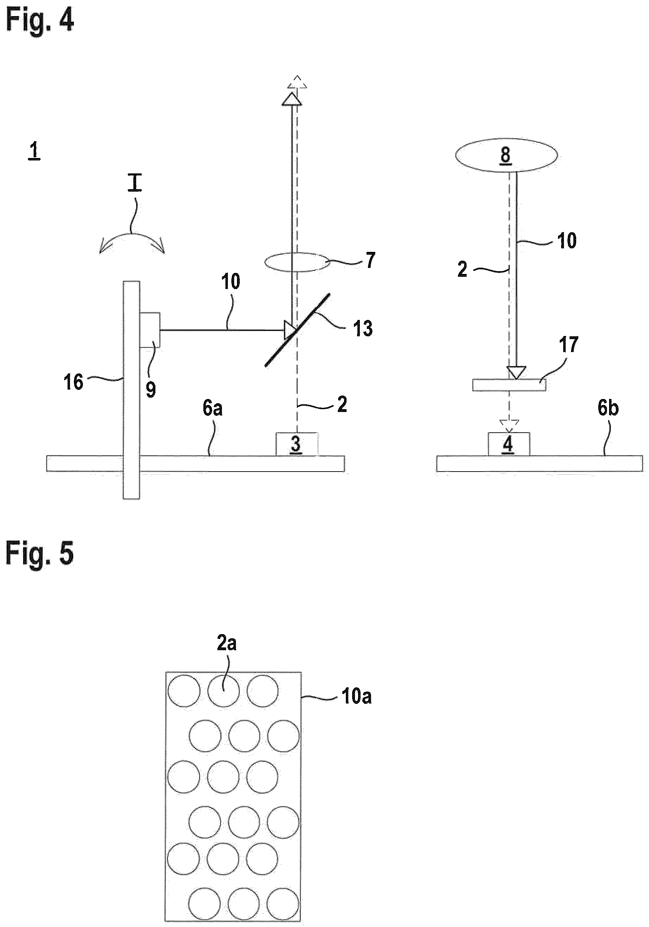

Figur 4 zeigt eine Variante der Ausführungsform gemäß Figur 3. In diesem Fall ist die Sendelinse 7 im Strahlengang der Lichtstrahlen 2 hinter dem dichroitischen Spiegel angeordnet und dient auch zur Strahlformung der Pilotlichtstrahlen 10 so dass die Linse 15 entfallen kann.

Figur 5 zeigt eine Variante des Senders 3 in Form eines VCSEL-Arrays, das mehrere Lichtstrahlen 2 generiert, wobei Figur 5 deren Lichtflecke 2a in einer Schnittdarstellung zeigt. Der Lichtfleck 10a der Pilotlichtstrahlen 10 umgibt diese Lichtflecke 2a. Auch hierzu verlaufen die Lichtstrahlen 2 und Pilotlichtstrahlen 10 koaxial. Der optischer Distanzsensor 1 kann dabei einen Aufbau gemäß den Figuren 1, 2, 3 oder 4 aufweisen.

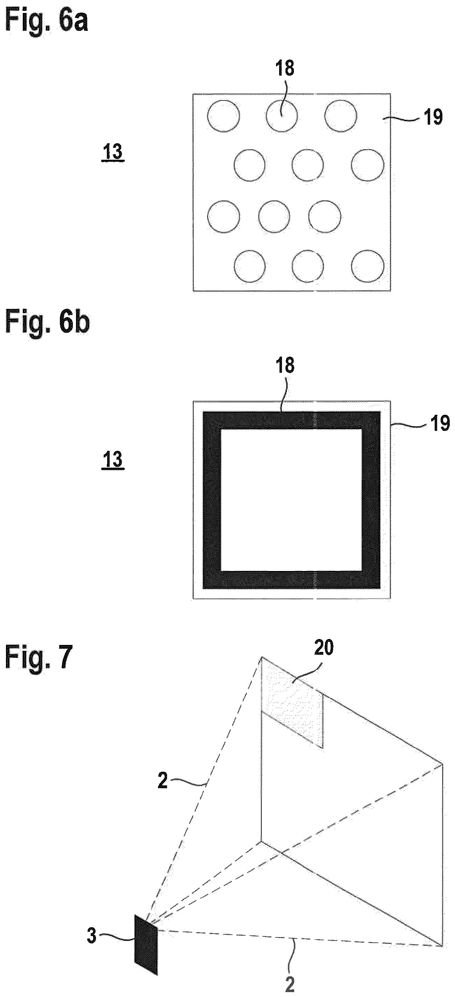

Die Figuren 6a, 6b zeigen Ausführungsbeispiele von Umlenkelementen 13 in Form von geometrischen Strahlteilern, die reflektierende Flächen 18 auf einen transparenten Glasträger 19 aufweisen. Der transparente Glasträger ist durchlässig für die Lichtstrahlen 2. An den reflektierenden Flächen 18 werden die Pilotlichtstrahlen 10 reflektiert, wodurch entsprechend der Ausbildung der reflektierenden Flächen 18 bestimmte Strahlmuster der Pilotlichtstrahlen 10 generiert werden können.

Mit der Ausführung des Senders 3 in Form eines VCSEL-Arrays mit speziell dafür gebauter Optik kann ein großer Öffnungswinkel in Form eines VCSEL-Arrays der Lichtstrahlen 2 realisiert werden, da ausreichend Sendeleistung zur Verfügung steht damit die Bestrahlungsstärke auf dem Objekt groß genau ist, wie in Figur 7 dargestellt.

Der Pilotsendeeinheit 9 ist in diesem Fall eine variable Blende 11 in Form einer TFT-Matrix nachgeordnet. Durch eine geeignete Ansteuerung der TFT-Matrix können einzelne Bereiche 20 der Lichtstrahlen 2 visualisiert und damit markiert werden, wie Figur 7 zeigt.

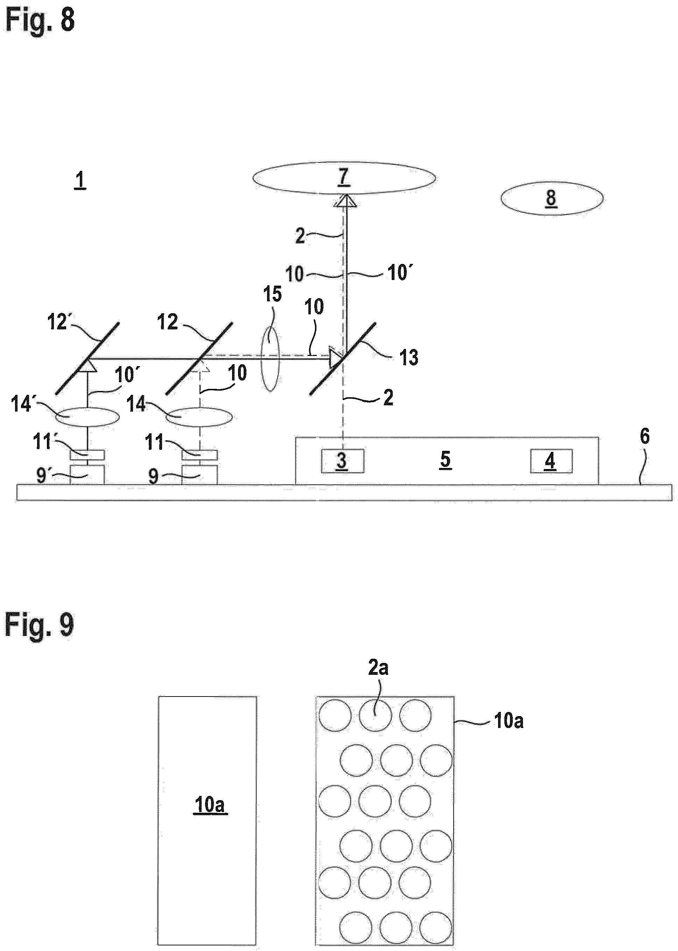

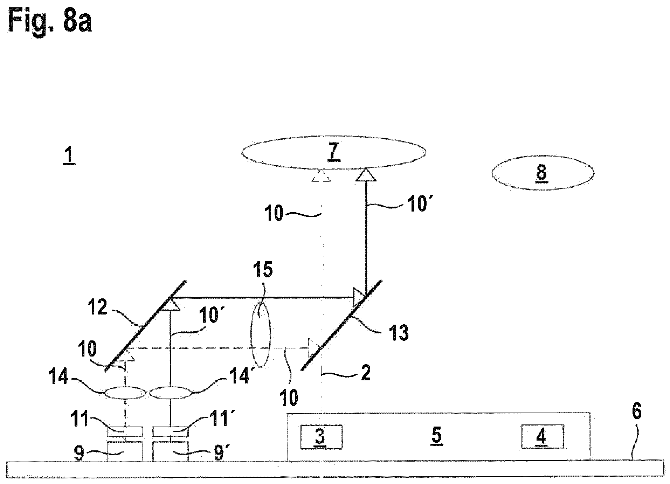

Figur 8 zeigt eine Erweiterung der Ausführungsform gemäß Figur 1.

Die Ausführungsform gemäß Figur 8 unterscheidet sich von der Ausführungsform gemäß Figur 1 dadurch, dass neben der Pilotlichtstrahlen 10 emittierenden Pilotsendeeinheit 9 eine weitere Pilotsendeeinheit 9' vorhanden ist, die weitere Pilotlichtstrahlen 10' emittiert. Auch der weiteren Pilotsendeeinheit 9' ist eine Blende 11' und eine Linse 14' nachgeordnet. Die Pilotsendeeinheiten 9, 9'emittieren Pilotlichtstrahlen 10, 10' mit unterschiedlichen Farben. Im vorliegenden Fall emittiert die Pilotsendeeinheit 9 grüne Pilotlichtstrahlen 10 die Pilotsendeeinheit 9' emittiert rote Pilotlichtstrahlen 10'.

Die Pilotlichtstrahlen 10, 10' beider Pilotsendeeinheiten 9, 9'werden jeweils über einen Umlenkspiegel 12, 12' abgelenkt und zum dichroitischen Spiegel geführt.

Durch diese Einkopplungsmittel verlaufen die Pilotlichtstrahlen 10 koaxial zu den Lichtstrahlen 2 und die weiteren Pilotlichtstrahlen 10' seitlich versetzt hierzu wie die entsprechenden Lichtflecke 2a der Lichtstrahlen 2 und die Lichtflecke 10a, 10a' der Pilotlichtstrahlen 10, 10' gemäß Figur 9 zeigen.

Mit den unterschiedlichen Pilotlichtstrahlen 10, 10' und deren unterschiedlichen Farben können unterschiedliche Sensorinformationen angezeigt werden.

Auch können verschiedene Sensorinformationen durch unterschiedliche Blinkfrequenzen der Pilotlichtstrahlen 10, 10' angezeigt werden.

Vorteilhaft sind bei dem erfindungsgemäßen optischen Distanzsensor 1 Schaltmittel vorhanden, mittels derer die Pilotsendeeinheit 9, 9' ein- und ausgeschaltet werden kann. Damit kann die oder jede Pilotsendeeinheit 9, 9' für bestimmte Zeiträume aktiviert sein.

Die Schaltmittel können von in den optischen Distanzsensor 1 einlesbaren Steuersignalen oder von Bedienelementen am optischen Distanzsensor 1 gebildet sein. Mit den Schaltmitteln kann die oder jede Pilotsendeeinheit 9, 9' aktiviert werden. Die Pilotsendeeinheit 9, 9' kann dann für eine vorgestellte Zeit aktiv bleiben. Alternativ kann die Pilotsendeeinheit 9, 9' über die Schaltmittel ausgeschaltet werden.

Figur 8a zeigt eine Variante der Ausführungsform gemäß Figur 8. In diesem Fall werden die Pilotlichtstrahlen 10, 10' gemeinsam über den Umlenkspiegel 12, 12' geführt.

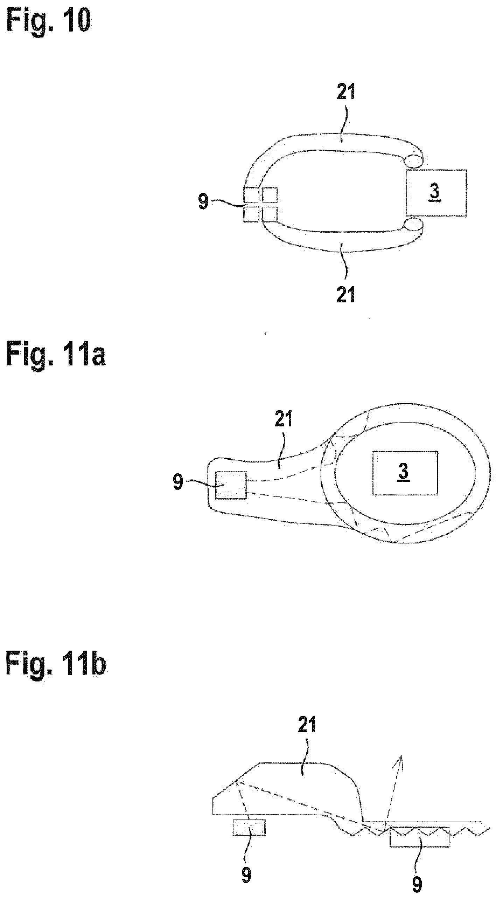

Die Figuren 10 und 11a, 11b zeigen schematisch Einkopplungsmittel in Form von Lichtleitern 21 mit denen die Pilotlichtstrahlen 10, 10' der Pilotsendeeinheiten 9, 9' in den Strahlengang der Lichtstrahlen 2 eingekoppelt werden, so dass die Pilotlichtstrahlen 10, 10' koaxial zu den Lichtstrahlen 2 verlaufen.

### Bezugszeichenliste

- (1): optischer Distanzsensor
- (2): Lichtstrahlen
- (2a): Lichtfleck
- (3): Sender
- (4): Empfänger
- (5): Laufzeitmodul
- (6): Leiterplatte
- (6a): erste Leiterplatte
- (6b): zweite Leiterplatte
- (7): Sendelinse
- (8): Empfangslinse
- (9, 9'): Pilotsendeeinheit
- (10, 10'): Pilotlichtstrahl
- (10a): Lichtfleck
- (11, 11'): Blende
- (12, 12'): Umlenkspiegel
- (13): Umlenkelement
- (14, 14'): erste Linse
- (15): zweite Linse
- (16): Leiterplatte
- (17): optischer Filter
- (18): Fläche
- (19): Starträger
- (20): Bereich
- (21): Stahlträger

- (I): Doppelpfeil

## Patentansprüche

1. Optischer Distanzsensor (1) mit einem Sender (3), der Lichtstrahlen (2) in einem nicht sichtbaren Wellenlängenbereich emittiert, und mit einem Empfänger (4), der zum Empfang von von einem Objekt zurückreflektierten Lichtstrahlen (2) ausgebildet ist, und mit einer Auswerteeinheit, welche zur Bestimmung der Distanz des Objekts abhängig von Empfangssignalen des Empfängers (4) ausgebildet ist, wobei eine Pilotsendeeinheit (9, 9') vorhanden ist, die sichtbare Pilotlichtstrahlen (10, 10') emittiert, wobei mittels Einkopplungsmitteln die Pilotlichtstrahlen (10, 10') in den Strahlengang der Lichtstrahlen (2) so eingekoppelt sind, dass die Pilotlichtstrahlen (10, 10') und Lichtstrahlen (2) mit zumindest partiell überlappenden Strahlquerschnitten koaxial verlaufen, **dadurch gekennzeichnet, dass** eine variable Blende (11, 11') vorhanden ist, mittels derer eine Strahlformung der Pilotlichtstrahlen (10, 10'), derart erfolgt, dass mit diesen ein Teil des Lichtflecks (2a) der Lichtstrahlen (2) ausgeleuchtet wird.

2. Optischer Distanzsensor (1) nach Anspruch 1, **dadurch gekennzeichnet, dass** der Sender (3) Lichtstrahlen (2) in Form von Lichtimpulsen emittiert, und dass die Distanzmessung nach einem Impuls-Laufzeit-Verfahren durchgeführt wird.

3. Optischer Distanzsensor (1) nach einem der Ansprüche 1 oder 2, **dadurch gekennzeichnet, dass** der Sender (3) eine VCSEL-Einheit ist.

4. Optischer Distanzsensor (1) nach einem der Ansprüche 1 bis 3, **dadurch gekennzeichnet, dass** der Sender (3) und die Pilotsendeeinheit (9, 9') jeweils von einem Halbleiterchip gebildet sind, wobei diese übereinanderliegend angeordnet sind und wobei der obenliegende Halbleiterchip ein Loch als Einkopplungsmittel aufweist, wobei Licht des anderen Halbleiterchip durch dieses Loch geführt ist oder dass auf eine Teilfläche des Senders (3) ein Material aufgebracht ist, das nicht sichtbares Licht in sichtbares Licht wandelt, oder dass als Einkopplungsmittel Lichtleiter vorgesehen sind.

5. Optischer Distanzsensor (1) nach einem der Ansprüche 1 bis 3, **dadurch gekennzeichnet, dass** als Einkopplungsmittel ein optisches Umlenkelement (13) vorgesehen ist.

6. Optischer Distanzsensor (1) nach Anspruch 5, **dadurch gekennzeichnet, dass** das optische Umlenkelement (13) ein dichroitischer Spiegel ist oder einen Interferenzfilter bildet.

7. Optischer Distanzsensor (1) nach einem der Ansprüche 5 oder 6, **dadurch gekennzeichnet, dass** mit dem optischen Umlenkelement (13) die Form des Strahlquerschnitts der Pilotlichtstrahlen (10, 10') vorgegeben wird.

8. Optischer Distanzsensor (1) nach einem der Ansprüche 1 bis 7, **dadurch gekennzeichnet, dass** mittels einer Blende (11, 11') die Größe des Lichtflecks (2a) der Pilotlichtstrahlen (10, 10') an die Größe des Lichtflecks (2a) der Lichtstrahlen (2) angepasst wird.

9. Optischer Distanzsensor (1) nach einem der Ansprüche 1 bis 8, **dadurch gekennzeichnet, dass** eine steuerbare Linse (14, 14') vorhanden ist, mittels derer der Verlauf der Pilotlichtstrahlen (10, 10') an den Verlauf der Lichtstrahlen (2) angepasst wird.

10. Optischer Distanzsensor (1) nach einem der Ansprüche 1 bis 9, **dadurch gekennzeichnet, dass** ein Verstellmechanismus vorhanden ist, der zur Veränderung der Strahlrichtung der Pilotlichtstrahlen (10, 10') ausgebildet ist.

11. Optischer Distanzsensor (1) nach einem der Ansprüche 1 bis 10, **dadurch gekennzeichnet, dass** Schaltmittel vorhanden sind, mittels derer die Pilotsendeeinheit (9, 9') ein- und ausgeschaltet werden kann.

12. Optischer Distanzsensor (1) nach einem der Ansprüche 1 bis 11, **dadurch gekennzeichnet, dass** die Pilotlichtstrahlen (10, 10') ein Anzeigemittel zur Anzeige von Sensorinformationen ausbilden.

13. Optischer Distanzsensor (1) nach Anspruch 12, **dadurch gekennzeichnet, dass** unterschiedliche Sensorinformationen durch unterschiedliche Farben und/oder unterschiedliche Blinkfrequenzen der Pilotlichtstrahlen (10, 10') angezeigt werden.

14. Optischer Distanzsensor (1) nach einem der Ansprüche 1 bis 13, **dadurch gekennzeichnet, dass** unterschiedliche Farben der Pilotlichtstrahlen (10, 10') dadurch generiert werden, dass die Pilotsendeeinheit (9, 9') mehrere Senderelemente aufweist, die Licht in unterschiedlichen Farben emittieren.

## Claims

1. Optical distance sensor (1) with a transmitter (3) that emits light beams (2) in a non-visible wavelength range, and with a receiver (4) which is designed to receive light beams (2) reflected back from an object, and with an evaluation unit which is designed to determine the distance of the object depending on reception signals from the receiver (4), wherein a pilot transmission unit (9, 9') is provided which emits visible pilot light beams (10, 10') are emitted, wherein the pilot light beams (10, 10') are coupled into the beam path of the light beams (2) by means of coupling means in such a way that the pilot light beams (10, 10') and light beams (2) run coaxially with at least partially overlapping beam cross-sections, **characterised in that** a variable aperture (11, 11') is provided, by means of which the pilot light beams (10, 10') are shaped in such a way that they illuminate part of the light spot (2a) of the light beams (2).

2. Optical distance sensor (1) according to claim 1, **characterised in that** the transmitter (3) emits light beams (2) in the form of light pulses, and that the distance measurement is carried out according to a pulse transit time method.

3. Optical distance sensor (1) according to one of claims 1 or 2, **characterised in that** the transmitter (3) is a VCSEL unit.

4. Optical distance sensor (1) according to one of claims 1 to 3, **characterised in that** the transmitter (3) and the pilot transmission unit (9, 9') are each formed by a semiconductor chip, wherein these are arranged one above the other and wherein the upper semiconductor chip has a hole as a coupling means, wherein light from the other semiconductor chip is guided through this hole, or that a material is applied to a partial surface of the transmitter (3) which converts invisible light into visible light, or that light guides are provided as coupling means.

5. Optical distance sensor (1) according to one of claims 1 to 3, **characterised in that** an optical deflection element (13) is provided as a coupling means.

6. Optical distance sensor (1) according to claim 5, **characterised in that** the optical deflection element (13) is a dichroic mirror or forms an interference filter.

7. Optical distance sensor (1) according to one of claims 5 or 6, **characterised in that** the optical deflection element (13) is used to predetermine the shape of the beam cross-section of the pilot light beams (10, 10').

8. Optical distance sensor (1) according to one of claims 1 to 7, **characterised in that** the size of the light spot (2a) of the pilot light beams (10, 10') is adjusted to the size of the light spot (2a) of the light beams (2) by means of an aperture (11, 11').

9. Optical distance sensor (1) according to one of claims 1 to 8, **characterised in that** a controllable lens (14, 14') is provided, by means of which the path of the pilot light beams (10, 10') is adjusted to the path of the light beams (2).

10. Optical distance sensor (1) according to one of claims 1 to 9, **characterised in that** an adjustment mechanism is provided which is designed to change the beam direction of the pilot light beams (10, 10').

11. Optical distance sensor (1) according to one of claims 1 to 10, **characterised in that** switching means are provided by means of which the pilot transmission unit (9, 9') can be switched on and off.

12. Optical distance sensor (1) according to one of claims 1 to 11, **characterised in that** the pilot light beams (10, 10') form a display means for displaying sensor information.

13. Optical distance sensor (1) according to claim 12, **characterised in that** different sensor information is displayed by different colours and/or different flashing frequencies of the pilot light beams (10, 10').

14. Optical distance sensor (1) according to one of claims 1 to 13, **characterised in that** different colours of the pilot light beams (10, 10') are generated by the pilot transmitting unit (9, 9') having several transmitting elements that emit light in different colours.

## Revendications

1. Capteur de distance optique (1) comprenant un émetteur (3) qui émet des faisceaux lumineux (2) dans une gamme de longueurs d'onde non visible, et un récepteur (4) qui est conçu pour recevoir les faisceaux lumineux (2) réfléchis par un objet, et une unité d'évaluation qui est conçue pour déterminer la distance de l'objet en fonction des signaux de réception provenant du récepteur (4), dans lequel une unité d'émission pilote (9, 9') qui émet des faisceaux lumineux pilotes visibles (10, 10'), les faisceaux lumineux pilotes (10, 10') étant couplés dans le trajet des faisceaux lumineux (2) au moyen de moyens de couplage de telle sorte que les faisceaux lumineux pilotes (10, 10') et les faisceaux lumineux (2) s'étendent de manière coaxiale avec des sections transversales de faisceau se chevauchant au moins partiellement, **caractérisé en ce qu'**il est prévu une ouverture variable (11, 11') au moyen de laquelle les faisceaux lumineux pilotes (10, 10') sont formés de telle sorte qu'ils éclairent une partie du spot lumineux (2a) des faisceaux lumineux (2).

2. Capteur de distance optique (1) selon la revendication 1, **caractérisé en ce que** l'émetteur (3) émet des faisceaux lumineux (2) sous forme d'impulsions lumineuses et **en ce que** la mesure de distance est effectuée selon un procédé de temps de transit d'impulsion.

3. Capteur de distance optique (1) selon l'une des revendications 1 ou 2, **caractérisé en ce que** l'émetteur (3) est une unité VCSEL.

4. Capteur de distance optique (1) selon l'une des revendications 1 à 3, **caractérisé en ce que** l'émetteur (3) et l'unité de transmission pilote (9, 9') sont chacun formés par une puce semi-conductrice, celles-ci sont disposées l'une au-dessus de l'autre et dans lequel la puce semi-conductrice supérieure comporte un trou servant de moyen de couplage, dans lequel la lumière provenant de l'autre puce semi-conductrice est guidée à travers ce trou, ou qu'un matériau est appliqué sur une surface partielle de l'émetteur (3) qui convertit la lumière invisible en lumière visible, ou que des guides de lumière sont prévus comme moyens de couplage.

5. Capteur de distance optique (1) selon l'une des revendications 1 à 3, **caractérisé en ce qu'**un élément de déviation optique (13) est prévu comme moyen de couplage.

6. Capteur de distance optique (1) selon la revendication 5, **caractérisé en ce que** l'élément de déviation optique (13) est un miroir dichroïque ou forme un filtre d'interférence.

7. Capteur de distance optique (1) selon l'une des revendications 5 ou 6, **caractérisé en ce que** l'élément de déviation optique (13) est utilisé pour prédéterminer la forme de la section transversale du faisceau des faisceaux lumineux pilotes (10, 10').

8. Capteur de distance optique (1) selon l'une des revendications 1 à 7, **caractérisé en ce que** la taille du spot lumineux (2a) des faisceaux lumineux pilotes (10, 10') est ajustée à la taille du spot lumineux (2a) des faisceaux lumineux (2) au moyen d'une ouverture (11, 11').

9. Capteur de distance optique (1) selon l'une des revendications 1 à 8, **caractérisé en ce qu'**il est prévu une lentille réglable (14, 14') au moyen de laquelle le trajet des faisceaux lumineux pilotes (10, 10') est ajusté au trajet des faisceaux lumineux (2).

10. Capteur de distance optique (1) selon l'une des revendications 1 à 9, **caractérisé en ce qu'**il est prévu un mécanisme de réglage qui est conçu pour modifier la direction des faisceaux lumineux pilotes (10, 10').

11. Capteur de distance optique (1) selon l'une des revendications 1 à 10, **caractérisé en ce qu'**il est prévu des moyens de commutation à l'aide desquels l'unité d'émission pilote (9, 9') peut être activée et désactivée.

12. Capteur de distance optique (1) selon l'une des revendications 1 à 11, **caractérisé en ce que** les faisceaux lumineux pilotes (10, 10') forment un moyen d'affichage pour afficher des informations du capteur.

13. Capteur de distance optique (1) selon la revendication 12, **caractérisé en ce que** différentes informations du capteur sont affichées par différentes couleurs et/ou différentes fréquences de clignotement des faisceaux lumineux pilotes (10, 10').

14. Capteur de distance optique (1) selon l'une des revendications 1 à 13, **caractérisé en ce que** différentes couleurs des faisceaux lumineux pilotes (10, 10') sont générées par l'unité d'émission pilote (9, 9') comportant plusieurs éléments d'émission qui émettent de la lumière dans différentes couleurs.
